(19) Europäisches Patentamt
European Patent Office
Office européen des brevets

(11) **EP 2 017 588 A1**

(12) **EUROPÄISCHE PATENTANMELDUNG**

(43) Veröffentlichungstag:
**21.01.2009 Patentblatt 2009/04**

(51) Int Cl.:
***G01G 19/00*** *(2006.01)*

(21) Anmeldenummer: 08104758.1

(22) Anmeldetag: **15.07.2008**

| | |
|---|---|
| (84) Benannte Vertragsstaaten:<br>**AT BE BG CH CY CZ DE DK EE ES FI FR GB GR HR HU IE IS IT LI LT LU LV MC MT NL NO PL PT RO SE SI SK TR**<br>Benannte Erstreckungsstaaten:<br>**AL BA MK RS**<br><br>(30) Priorität: **18.07.2007 DE 102007033837**<br>**22.01.2008 DE 102008005540** | (71) Anmelder: **Siemens Aktiengesellschaft**<br>**80333 München (DE)**<br><br>(72) Erfinder:<br>• **Gerstenberg, Frank**<br>**10409, Berlin (DE)**<br>• **Schultz, Juliane**<br>**13053, Berlin (DE)**<br>• **Voss, Frank**<br>**12623, Berlin (DE)** |

(54) **Verfahren und Vorrichtung zum Wiegen von Postsendungen**

(57)     Die Erfindung geht aus von einem Verfahren zum Wiegen von Postsendungen (S, $S_1$ - $S_{10}$), bei dem in einem Sendungsstrom transportierte Postsendungen (S, $S_1$ - $S_{10}$) in einem Wiegesystem (20) gewogen werden.

Um Postsendungen mit hoher Wiegeleistung wiegen zu können wird vorgeschlagen, dass Abstände zwischen den zu wiegenden Postsendungen (S, $S_1$ - $S_{10}$) in Abhängigkeit eines Wiegeparameters aktiv beeinflusst werden.

FIG 1

**Beschreibung**

Die Erfindung betrifft ein Verfahren zum Wiegen von Postsendungen, bei dem in einem Sendungsstrom transportierte Postsendungen in einem Wiegesystem gewogen werden. Außerdem betrifft die Erfindung eine Vorrichtung zum Wiegen von Postsendungen mit einem Transportmittel zum Transport der Postsendungen in einem Sendungsstrom und mit einem Wiegesystem zum Wiegen der im Sendungsstrom transportierten Postsendungen.

Flache Postsendungen, wie Briefe, Großbriefe, Postkarten, eingeschweißte Zeitschriften und dergleichen, werden in Briefzentren oder großen Postämtern in sehr großer Zahl bearbeitet und beispielsweise nach ihrer Adresse sortiert. In entsprechenden Verarbeitungsanlagen werden die Postsendungen hierzu von einer Vereinzelungseinrichtung vereinzelt und mit hoher Geschwindigkeit und geringen Abständen untereinander in einem Sendungsstrom von hintereinander transportierten Postsendungen zu nachgeordneten Modulen transportiert, wo sie gelesen, bearbeitet und gegebenenfalls sortiert werden.

Ein Bearbeiten von Postsendungen kann ein Wiegen der Postsendungen umfassen. Hierbei werden die Postsendungen im Sendungsstrom über eine Waage geführt, die das Gewicht einer einzelnen Postsendung erfasst und entsprechende Daten an eine Datenverarbeitungsanlage übersendet. Bei einem dynamischen Wiegen von Postsendungen werden von der Waage erfasste Gewichtsdaten ständig zur Datenverarbeitungsanlage übertragen, auch wenn einzelne Daten für sich genommen noch keine Auskunft über das exakte Gewicht der gerade gemessenen Postsendung geben kann. Um eine hohe Wiegeleistung zu erreichen, also um möglichst viele Postsendungen in kurzer Zeit wiegen zu können, sind möglichst kurze Lücken zwischen den im Sendungsstrom transportierten Postsendungen an der Waage ein wesentliches Kriterium. Dem entgegen steht eine notwendige Prozesszeit einer Waage, die diese benötigt, um eine Postsendung zu wiegen. In bekannten typischen Waage-Anordnungen ist die Prozesszeit bestimmt durch eine Einschwingzeit und eine notwendige Messzeit.

Um das korrekte Gewicht einer Postsendung zu ermitteln, ist es notwendig, dass während der Messzeit nur eine Postsendung über eine Wiegeplattform der Waage bewegt wird. Die Prozesszeit wird daher je nach Messverfahren durch den sogenannten "double pitch", also den Abstand zwischen den Vorderkanten der ersten und der übernächsten aufeinander folgenden Postsendungen, oder den sogenannten "double gap", also den Abstand zwischen der Hinterkante der ersten und der Vorderkante der übernächsten aufeinander folgenden Postsendungen, beschränkt.

In klassischen Wiegesystemen werden die zu wiegenden Güter in einem sogenannten "constant pitch mode" der Waage zugeführt, bei dem die Vorderkanten der Postsendungen jeweils einen konstanten Abstand zueinander haben. Dabei muss dieser Abstand bzw. die Länge des Wiegesystems auf die längste zu wiegende Postsendung ausgerichtet werden. Das führt jedoch dazu, dass für kurze Postsendungen mehr Prozesszeit als notwendig zur Verfügung steht, der operationelle Durchsatz ist bei stark unterschiedlichen Sendungslängen daher entsprechend gering.

Zur Optimierung des Durchsatzes bei unterschiedlich langen Postsendungen ist es vorteilhaft, die Postsendungen im sogenannten "constant gap mode" der Waage zuzuführen, bei dem die Lücken zwischen den einzelnen Postsendungen jeweils gleich lang sind. Die Größe der Lücken ist in einer Sortiermaschine häufig auch durch die Anforderungen der auf das Wiegesystem nachfolgenden Prozessgeräte abgestimmt und soll zur Gewährleistung eines maximalen Maschinendurchsatzes minimal sein.

Aus der EP 1 400 790 B1 ist es bekannt, die minimale Lücke zwischen aufeinander folgenden Postsendungen in Abhängigkeit der Geschwindigkeit, mit der die Postsendungen über die Waage bewegt werden, der Prozesszeit der Waage und der Waagenlänge zu berechnen. Hierbei kann der Wiegeort der Postsendung auf der Waage dynamisch variieren und innerhalb bestimmter Grenzen erfolgen. Bei einem solchen Wiegesystem, bei dem das Wiegesystem auf die minimalen Lücken bzw. die minimalen Lücken auf das Wiegesystem optimiert wurden, sind die Soll-Lücken am Eingang des Wiegesystems immer gleich groß und entsprechen bei Durchsatzoptimierung der minimal möglichen Lücke.

Aus der EP 0 881 956 B1 ist ein Doppelwiegesystem bekannt, das zwei exakt gleich lange Wiegestränge aufweist. Ein Sendungsstrom wird symmetrisch und mit gleichen Transportgeschwindigkeiten auf die beiden Wiegestränge aufgeteilt, so dass große Lücken zwischen benachbarten Postsendungen entstehen, mit denen die Postsendungen gewogen werden können. Da die Durchlaufzeiten der Postsendungen durch beide Transportstränge stets gleich sind, können die beiden Sendungsströme nach den Transportsträngen wieder zusammengeführt und zu einem Sendungsstrom vereinigt werden.

Es ist eine Aufgabe der vorliegenden Erfindung, ein Verfahren und eine Vorrichtung zum Wiegen von Postsendungen anzugeben, mit denen Postsendungen mit hoher Wiegeleistung gewogen werden können.

Die auf das Verfahren gerichtete Aufgabe wird durch ein Verfahren der eingangs genannten Art gelöst, bei dem erfindungsgemäß Abstände zwischen den zu wiegenden Postsendungen in Abhängigkeit eines Wiegeparameters aktiv beeinflusst werden. Es können für einen nachfolgenden Wiegeprozess zu enge Lücken vergrößert werden, so dass ein Wiegen der betreffenden Postsendungen ermöglicht wird. Hierdurch können Postsendungen in einem Sendungsstrom mit sehr kleinen Lücken an das Wiegesystem herangeführt werden, und es kann eine hohe Wiegeleistung, also ein hoher Durchsatz von gewogenen Postsendungen pro Zeit, erreicht werden. Die Postsendungen sind vorteilhafterweise flache Postsendungen, deren Dicke höchstens 1/10 der Länge als auch Breite beträgt.

Die Erfindung geht hierbei von der Überlegung aus, dass ein Wiegesystem bei einer Reihe von zu wiegenden Postsendungen mit jeweiligen Sendungslängen bei einer vorbestimmten Transportgeschwindigkeit bestimmte Lückengrößen zwischen den Postsendungen benötigt, um diese Postsendungen wiegen zu können. Diese benötigten Lücken können größer oder kleiner sein als Lücken, die von anderen Bearbeitungsmodulen einer Sortieranlage zur Bearbeitung der Postsendungen benötigt werden. Durch ein gezieltes Verändern der Lücken vor dem Wiegesystem können die für das Wiegen benötigten Lücken eingestellt werden, ohne dass diese Lücken für den gesamten Sortierprozess vorhanden sein müssten. Somit kann ein hoher Durchsatz von Postsendungen durch die Sortieranlage geschaffen werden.

Außerdem geht die Erfindung von der Überlegung aus, dass sich Postsendungen während eines Transports im Sendungsstrom untereinander verschieben, verbunden mit einer teilweisen Verringerung der Lücken zwischen den Postsendungen. Um unter Berücksichtigung einer solchen Verschiebung ein Wiegen auch der verschobenen Postsendungen zu erreichen, muss eine Solllücke zwischen den Postsendungen entsprechend groß eingestellt werden, so dass eine für einen Wiegeprozess notwendige Minimallücke mit hoher Wahrscheinlichkeit gewährleistet bleibt. Durch ein aktives Beeinflussen der Lücken zwischen den zu wiegenden Postsendungen kann die Solllücke klein gehalten und ein hoher Durchsatz erreicht werden, wobei zu kleine Lücken auf eine Minimallücke korrigiert werden.

Unter einem aktiven Beeinflussen kann verstanden werden, dass die Abstände von einem Prozessmittel, z.B. in Form eines Datenverarbeitungsmittels, gesteuert verändert werden, wobei die Einflussnahme des Prozessmittels zur Veränderung der Abstände dient. Im Folgenden wird unter einer Beeinflussung der Abstände immer eine solche aktive Beeinflussung verstanden. Zweckmäßigerweise erfolgt das Beeinflussen der Abstände in Abhängigkeit eines Wiegeparameters des Wiegesystems. Auf diese Weise können die Abstände an das Wiegesystem derart angepasst werden, dass mehr Postsendungen gewogen werden können als ohne eine solche Beeinflussung. Ein Wiegeparameter kann hierbei ein Parameter sein, der von Waagedaten, insbesondere in Verbindung mit Sendungsdaten, Lückendaten und/ oder einer Transportgeschwindigkeit abhängt, insbesondere bestimmt ist. Der Parameter kann möglichst groß oder klein werden sollen. Der Parameter kann z.B. eine Rejectrate sein, ein möglichst hoher Durchsatz durch das Wiegesystem oder die Ermöglichung einer möglichst langen Wiegezeit bzw. Wiegestrecke einer Postsendung auf einer Waage des Wiegesystems.

Auch ist die Beeinflussung der Abstände zweckmäßigerweise von Lücken zwischen den Postsendungen abhängig, die vor dem Wiegesystem im Sendungsstrom bewegt werden. Hierfür werden die Lücken zweckmäßigerweise auf ihrer Länge vermessen, wobei das Prozessmittel die Messdaten zur Beeinflussung der Abstände verarbeitet.

Eine vorteilhafte Möglichkeit zur Beeinflussung der Abstände besteht darin, die Abstände durch ein Verschieben einer Postsendung im Sendungsstrom zu verändern. Die Abstände zwischen Postsendungen werden zweckmäßigerweise beeinflusst, bevor die Postsendungen das Wiegesystem erreichen. Durch ein entsprechendes Verschiebemittel zum Verschieben einer Postsendung im Sendungsstrom wird die Lücke vor und nach der verschobenen Postsendung vergrößert bzw. verkleinert oder anders herum. Das Verschieben der Postsendung kann durch eine temporäre Geschwindigkeitsänderung der Postsendung im Verschiebemittel erreicht werden. Das Verschiebemittel kann vor einer Auftrennung des Sendungsstroms auf zwei Transportstränge angeordnet sein oder es können zwei getrennte Verschiebemittel jeweils nach der Auftrennung und vor dem Wiegesystem angeordnet sein.

Vorzugsweise werden mit dem Verschiebemittel am Eingang des Wiegesystems die Lücken so beeinflusst, dass die Prozesszeit eingehalten und gleichzeitig eine Korrektur vorangegangener Lückenfehler für den weiteren Bearbeitungsprozess erreicht wird.

Es kann vorkommen, dass eine Konstellation von Sendungslängen und Lücken so ist, dass Postsendungen - gegebenenfalls trotz eines Aufspaltens des Sendungsstroms auf zwei Wiegestränge - nicht gewogen werden können. Eine Rate von nicht wiegbaren Postsendungen zu wiegbaren Postsendungen, kurz: Rejectrate, kann gering gehalten werden, wenn einzelne Postsendungen vor dem Wiegesystem aus dem Sendungsstrom aus zu wiegenden Postsendungen ausgeschleust werden. Hierdurch können die Lücken zwischen Postsendungen so vergrößert werden, dass die der ausgeschleusten Postsendung benachbarten Postsendungen gewogen werden können. Zweckmäßigerweise ist hierzu ein Ausschleusemittel zum Ausschleusen von Postsendungen aus einem Sendungsstrom von zu wiegenden Postsendungen vorgesehen.

Kritische Sendungen, deren Ausschleusen vorteilhaft ist, können Postsendungen sein, für die entweder aufgrund ihrer Länge und der ihr vor- und nachlaufenden Lücke die Prozesszeit nicht ausreicht, oder deren Ausschleusen die zur Verfügung stehende Prozesszeit für nachfolgende Postsendungen so vorteilhaft beeinflusst, dass sich die Zahl der Postsendungen, die ansonsten nicht gewogen werden könnten, reduziert.

Die kritischen Postsendungen aus dem Sendungsstrom, die ausgeschleust wurden, können in einem Stapelmittel abgestapelt werden. In einer vorteilhaften Ausführungsform der Erfindung werden die ausgeschleusten Postsendungen jedoch um das Wiegesystem herum und wieder in einen Sendungsstrom eingeführt. Die Postsendungen können nachfolgende Prozessgeräte passieren und zumindest teilweise bearbeitet werden, so dass sie die Anlage nicht vollständig wiederholt durchlaufen müssen.

Hierzu weist das Ausschleusemittel zweckmäßigerweise einen Bypass zum Vorbeiführen von Postsendungen um das Wiegesystem auf. Der Bypass ist insbesondere ein aktiver Bypass, der von einem Prozessmittel bei Bedarf zur Aufnahme von vorbei zu führenden Postsendungen angesteuert wird, in Abhängigkeit eines Wiegeparameters und/oder Lücken. Der Bypass ist parallel zu einem oder mehreren Wiegesträngen ausgeführt und ist zweckmäßigerweise mit der gleichen Transportlänge ausgeführt wie zumindest ein umgangener Wiegestrang. Die gleiche Transportlänge ist auch dann gegeben, wenn sie um eine Toleranz, die zu der Lückentoleranz passt, abweicht. Ein aktives Vorbeischleusen einzelner Postsendungen an dem Wiegesystem führt in vielen Fällen aufgrund des freiwerdenden Waagenplatzes für vor- und/oder nachgelagerte Postsendungen zu günstigeren Verhältnissen, so dass eine Rejectrate reduziert wird. Insbesondere in Verbindung mit einer aktiven Lückenbeeinflussung durch Verschieben einer oder mehrerer Postsendungen kann die Rejectrate weiter reduziert werden.

In einer weiteren Ausführungsform der Erfindung werden mittels eines ersten Lückenmittels am Eingang des Wiegesystems und zusätzlich eines zweiten Lückenmittels am Ausgang des Wiegesystems die Lücken zwischen den Postsendungen im Sendungsstrom so beeinflusst, dass eine Veränderung der Lücken durch das eingangsseitige Lückenmittel durch das ausgangsseitige Lückenmittel wieder zurückkorrigiert wird. Hierdurch kann eine Eliminierung oder zumindest eine wesentliche Reduzierung der Rejectrate erreicht werden, wobei auf das Wiegesystem eingestellte Lücken derart zurückkorrigiert werden können, dass sie den späteren Transport der Postsendungen durch beispielsweise eine Sortieranlage nicht beeinträchtigen.

Es wird außerdem vorgeschlagen, dass ein Sendungsstrom im Wiegesystem mit einer höheren Geschwindigkeit transportiert wird als vor und/oder nach dem Wiegesystem. Die Postsendungen können temporär beschleunigt und anschließend wieder abgebremst werden, so dass bei gleicher Prozesszeit auch bei proportional verlängertem Messweg wegen der durch die konstanten Sendungslängen bei gleichem Durchsatz effektiven überproportionalen Lückenerhöhungen eine Verringerung oder Eliminierung der Rejectrate erfolgt. Außerdem kann durch eine dynamische Anpassung der Geschwindigkeit einer Reihe von hintereinander transportierten Postsendungen oder einzelner Postsendungen in dem Wiegesystem die Prozesszeit auch für kritische Postsendungen eingehalten werden und damit die Rejectrate reduziert oder eliminiert werden.

Zweckmäßigerweise umfasst das Lückenmittel hierzu vor dem Wiegesystem ein Beschleunigungsmittel zum beschleunigten Transport von Postsendungen durch das Wiegesystem und nach dem Wiegesystem ein Verzögerungsmittel zum Verzögern der derart beschleunigten Postsendungen auf eine langsamere Sendungsstromgeschwindigkeit.

In einer weiteren Ausführungsform der Erfindung kann die Rejectrate dadurch verringert oder gar eliminiert werden, dass ein Vereinzelungsmittel von vorneherein mit einer höheren Geschwindigkeit abzieht, als der Sendungsstrom nach dem Wiegesystem transportiert wird. Beispielsweise kann mit einer Geschwindigkeit von 3,8 m/s abgezogen und zum Wiegesystem und durch dieses hindurchtransportiert werden und nach dem Wiegesystem mit einer Geschwindigkeit von 3,5 m/s weiter transportiert werden, wobei mittels eines Lückenmittels bzw. Verzögerungsmittels eine Geschwindigkeitsreduzierung am Ende des Wiegesystems erfolgen kann.

In einer weiteren vorteilhaften Ausführungsform der Erfindung werden Postsendungen in zwei parallelen Wiegesträngen gewogen. Hierzu umfasst das Wiegesystem zweckmäßigerweise zwei parallele Wiegestränge.

Vorteilhafterweise werden Postsendungen aus einem Sendungsstrom asymmetrisch auf zwei parallele Wiegestränge des Wiegesystems aufgeteilt. Durch eine solche asymmetrische Auslegung der Briefläufe auf die beiden parallelen Wiegestränge mit den beiden Teilwaagesystemen und das gezielt asymmetrische Verteilen des Sendungsstroms auf die beiden Teil-Waagesysteme, können Lücken zwischen Postsendungen gezielt verändert werden. Hierdurch können kritische Bereiche entzerrt und eine Rejectrate kann verringert oder eliminiert werden.

Eine weitere vorteilhafte Ausführungsform der Erfindung sieht vor, dass Postsendungen aus einem Sendungsstrom in Abhängigkeit von Lücken zwischen den Postsendungen auf zwei parallele Wiegestränge des Wiegesystems aufgeteilt werden. Auch mit einer solchen Aufteilung, die eine asymmetrische Aufteilung sein kann, können kritische Bereiche gezielt entzerrt werden.

Liegen Sendungslängen von Postsendungen unterhalb einer Untergrenze, so kann die notwendige Prozesszeit dennoch eingehalten werden, wenn die Lücken am Vereinzelungsmittel temporär vergrößert werden. Zum Beispiel kann temporär von einem constant gap mode auf einen constant pitch mode umgeschaltet werden, um Postsendungen in einem Strom kurzer Postsendungen dennoch alle wiegen zu können.

Die auf die Vorrichtung gerichtete Aufgabe wird durch eine Vorrichtung zum Wiegen von Postsendungen der eingangs genannten Art gelöst, die erfindungsgemäß ein Lückenmittel zum aktiven Beeinflussen von Abständen zwischen den zu wiegenden Postsendungen in Abhängigkeit eines Wiegeparameters des Wiegesystems aufweist. Das Lückenmittel kann hierfür ein Prozessmittel umfassen oder mit einem solchen verbunden sein, das die Beeinflussung der Abstände zweckmäßigerweise gezielt steuert. Zusätzlich erfolgt die Beeinflussung zweckmäßigerweise in Abhängigkeit von den Lücken zwischen den Postsendungen. Das Lückenmittel, auch Gap Manipulation Unit genannt, kann ein Mittel sein zum gezielten Beeinflussen von einzelnen Lücken zwischen Postsendungen in einem Sendungsstrom, insbesondere unabhängig von einem Vereinzelungsprozess. Das gezielte Beeinflussen umfasst ein individuelles Beeinflussen, so dass ein Maß für eine jede Beeinflussung einer jeden Lücke individuell eingestellt werden kann, z.B. von einem Prozessmittel. Es können ein Lücke, mehrere Lücken oder alle Lücken in einem Sendungsstrom unterschiedlich beeinflusst werden. Das Lückemittel kann ein Bypass sein und/oder ein oder mehrere Verschiebemittel zum Verschieben einer Postsendung im Sendungsstrom relativ zu den sie umgebenden Postsendungen umfassen.

Zweckmäßigerweise umfasst die Vorrichtung einen Bypass zum Vorbeiführen von Postsendungen aus dem Sendungsstrom um das Wiegesystem. Der Bypass ist vorteilhafterweise durch die gleiche Transportlänge wie das Wiegesystem versehen, wobei sich die gleiche Transportlänge auf die gleiche Transportzeit bei gleicher Transportgeschwindigkeit bezieht. Umfasst die Vorrichtung zwei parallele Wiegestränge, so können diese mit unterschiedlicher Transportlänge ausgeführt sein. Durch den Wiegestrang mit einer kürzeren Transportlänge werden Postsendungen schneller transportiert, so dass hierdurch nach Zusammenführen der beiden Sendungsströme aus den Wiegesträngen eine Beeinflussung der Lücken zwischen den Postsendungen im vereinigten Sendungsstrom resultiert. Diese Beeinflussung kann hierdurch ohne ein zusätzliches Modul gezielt zur Lückenkorrektur verwendet werden.

Die Erfindung wird anhand von Ausführungsbeispielen näher erläutert, die in den Zeichnungen dargestellt sind.

Es zeigen:

FIG 1      eine Vorrichtung zum Wiegen von Postsendungen mit zwei Wiegesträngen und einem Bypass,

FIG 2      drei Momentaufnahmen eines Transports von Postsen- dungen über eine Waage,

FIG 3      einen Sendungsstrom an vier Zeitpunkten vor und nach einem Wiegen von Postsendungen, wobei zwei Postsendungen im Sendungsstrom verschoben werden,

FIG 4      einen Sendungsstrom an zwei Zeitpunkten mit zwei verschiedenen Sendungsaufteilungen,

FIG 5      einen Sendungsstrom, der asymmetrisch auf zwei Wie- gestränge verteilt wird, an zwei Zeitpunkten mit drei verschiedenen Sendungsaufteilungen und

FIG 6      einen Sendungsstrom, der zum Wiegen seiner Postsen- dungen temporär beschleunigt wird.

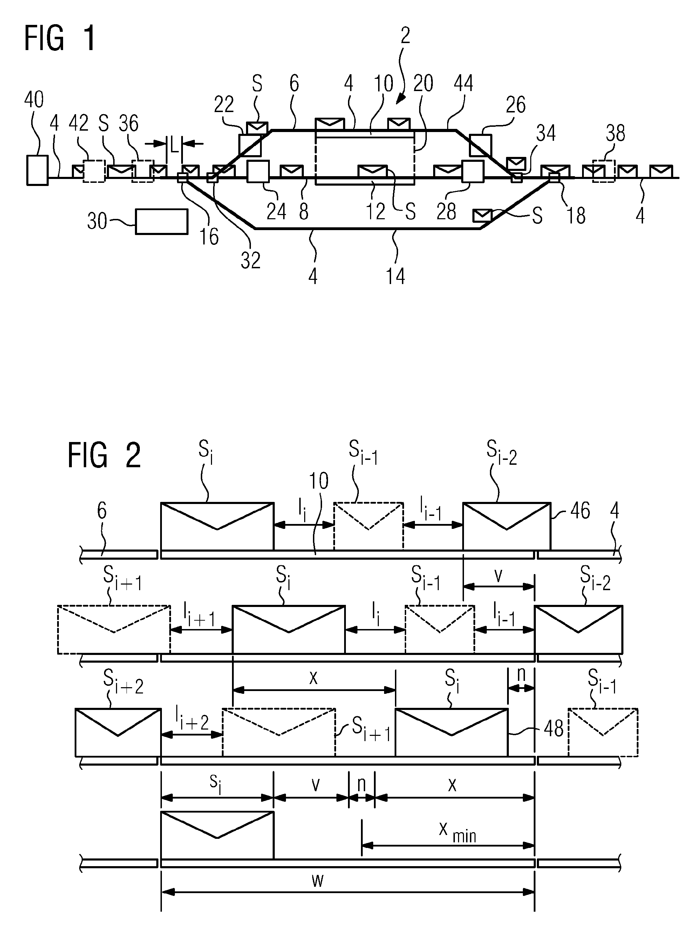

FIG 1 zeigt eine Vorrichtung 2 zum Wiegen von Postsendungen S, die in einem Sendungsstrom durch ein Transportmittel 4 bewegt werden. Die Vorrichtung umfasst zwei Wiegestränge 6, 8 mit jeweils einer Wage 10, 12, die parallel zueinander geführt sind. Beide Wiegestränge 6, 8 umgehend, ist ein erstes Lückenmittel in Form eines Bypass 14 angelegt, der mit einem Ausschleusemittel 16 beginnt und in einem Einschleusemittel 18 endet. Die beiden Wiegestränge 6, 8 mit ihren ein Wiegesystem 20 bildenden Waagen 10, 12 sind, wie in FIG 1 schematisch dargestellt ist, mit unterschiedlichen Transportlängen ausgeführt. Der Wiegestrang 6 ist etwas länger als der Wiegestrang 8, so dass ein Transport von Postsendungen S durch den Wiegestrang 6 bei gleicher Transportgeschwindigkeit durch die beiden Wiegestränge 6, 8 etwas länger dauert als durch den Wiegestrang 8. Die Transportlänge des Bypasses 14 ist so lang wie die Transportlänge des längeren Wiegestrangs 6.

In beiden Wiegesträngen 6, 8 sind jeweils zwei weitere Lückemittel in Form von zwei Verschiebemittel 22, 24, 26, 28 angeordnet, die zu einem Verschieben einer sie durchlaufenden Postsendung S im Sendungsstrom vorgesehen sind. Hierzu umfassen die Verschiebemittel 22 - 28 jeweils ein Beschleunigungs- und Verzögerungsmittel, das zu einem kurzzeitigen Beschleunigen bzw. Verzögern der sie durchlaufenden Postsendung S im Sendungsstrom ausgelegt ist. Die Verschiebemittel 22 - 28 werden von einem Prozessmittel 30 gesteuert, das eine Datenverarbeitungsanlage umfasst und zur Steuerung aller beschriebenen Verfahrensschritte vorgesehen ist.

Außerdem umfasst die Vorrichtung 2 noch zwei Weichen 32, 34 zum Aufteilen eines ankommenden Sendungsstroms in jeweils einen Sendungsstrom auf jeden Wiegestrang 6, 8 bzw. zum Vereinigen der beiden Sendungsströme in einen vereinigten Sendungsstrom. Alternativ zu den Verschiebemitteln 22 - 28 kann die Vorrichtung 2 Lückenmittel in Form von Verschiebemitteln 36, 38 umfassen, die vor bzw. nach den Wiegesträngen 6, 8 angeordnet sind.

Durch die fett dargestellten Transportstrecken 4 ist in FIG 1 außerdem angedeutet, dass die Postsendungen S mit verschiedenen Geschwindigkeiten transportiert werden können. So besteht die Möglichkeit, die Postsendungen S im fett dargestellten Transportstreckenbereich mit einer höheren Geschwindigkeit zu transportieren als in den übrigen Transportbereichen. Hierzu kann die Vorrichtung 2 nicht dargestellte Beschleunigungs- bzw. Verzögerungsmittel umfassen, die zu einer Beschleunigung bzw. Verzögerung des gesamten Sendungsstroms vorgesehen sind. Alternativ ist denkbar, die Postsendungen S bereits in einem der Vorrichtung 2 vorgeschalteten Vereinzelungsmittel 40 schneller zu transportieren, so dass der fette Transportstrangbereich auf der linken Seite von FIG 1 bis zum Vereinzelungsmittel 40 durchgezogen zu denken wäre. Auf ein - nicht dargestelltes - Beschleunigungsmittel könnte dann verzichtet werden, wobei die Vorrichtung 2 dann nur das nicht dargestellte Verzögerungsmittel am rechten Ende der fetten Transportstrecke umfassen würde.

In FIG 1 ist dargestellt, wie der von links aus dem Vereinzelungsmittel 40 nach rechts strömend zu denkende Sendungsstrom aus einer Vielzahl von Postsendungen S symmetrisch auf die beiden Wiegestränge 6, 8 verteilt wird, die Postsendungen S werden also gleichmäßig und alternierend auf die beiden Wiegestränge 6, 8 verteilt. Eine Ausnahme hiervon bilden einzelne Postsendungen S, die vor den beiden Wiegesträngen 6, 8 aus dem Sendungsstrom ausgeschleust, durch den Bypass 14 transportiert und im Einschleusemittel 18 in den vereinigten Sendungsstrom wieder eingeschleust werden. Mittels eines Sensors 42 werden die Längen der am Sensor 42 vorbei geführten Postsendungen S und die Abstände, im Folgenden auch Lücken genannt, zwischen den Postsendungen S ausgemessen und entsprechende Daten werden vom Sensor 42 zum Prozessmittel 30 zur Auswertung übermittelt.

Hierbei ist es vorteilhaft, wenn der Sensor 42 möglichst weit vor dem Wiegesystem 20 angeordnet ist, um einen zeitlich weiten Überblick über die Sendungslängen und Lücken L zu haben. Je größer der Überblick ist, desto besser können die Lücken L zum Wiegen gezielt beeinflusst werden. Da sich die Lücken L auf dem Weg der Postsendungen S vom Sensor 42 zum Wiegesystem verändern können, ist ein zweiter Sensor vorteilhaft - er wäre zwischen Verschiebemittel 36 und Ausschleusemittel 16 darzustellen, der näher vor dem Wiegesystem 20 ist, um die Größe der Lücken L überprüfen und eine Korrektur der Manipulationsstrategie vornehmen zu können. Zweckmäßigerweise ist dieser zweite Sensor so nah am Wiegesystem 20, dass die Lücken L von dort bis zum Wiegesystem 20 sich kaum noch verändern.

FIG 2 zeigt einen Sendungsstrom mit fünf Postsendungen $S_{i-2}$ bis $S_{i+2}$, der wie auch in FIG 1 von links nach rechts im Transportmittel 4 transportiert wird, zu drei verschiedenen Momentaufnahmen. Der Sendungsstrom wurde bereits auf die beiden Wiegestränge 6, 8 alternierend aufgeteilt, wobei die gestrichelt dargestellten Postsendungen $S_{i-1}$ und $S_{i+1}$ auf beispielsweise den Wiegestrang 8 und die übrigen drei Postsendungen $S_i$, $S_{i-2}$ und $S_{i+2}$ dem Wiegestrang 6 zugewiesen worden sind, der dargestellt ist. Noch im vereinigten Sendungsstrom bestanden zwischen den Postsendungen S Lücken L, deren Längen $l_{i-1}$ - $l_{i+1}$ vom Sensor 42 aus gemessen wurden.

Bei der in der obersten Zeile von FIG 2 dargestellten Momentaufnahme befinden sich zwei Postsendungen $S_i$ und $S_{i-2}$ auf der Waage 10 des Wiegestrangs 6, wobei die dazwischen liegende Postsendung $S_{i-1}$ gerade auf der Waage 12 des Wiegestrangs 8 positioniert ist und daher nur gestrichelt dargestellt ist. Durch das "Entfernen" der Postsendung $S_{i-1}$ ist zwischen den Postsendungen $S_i$, $S_{i-2}$ eine lange Lücke mit der Länge

$$L_{i-1} = l_i + l_{i-1} + s_{i-1},$$

wobei $s_{i-1}$ die Länge der Postsendung $S_{i-1}$ ist. Bei der in der ersten Zeile gezeigten Momentaufnahme ist eine Vorderkante 46 der vordersten Postsendung $S_{i-2}$ bereits außerhalb der Waage 10, so dass die Postsendung $S_{i-2}$ nicht mehr vollständig auf der Waage 10 platziert ist.

Es soll nun das Gewicht der Postsendung $S_i$ bestimmt werden. Dies ist erst dann möglich, wenn die Postsendung $S_i$ vollständig auf der Waage 10 angeordnet ist, wie dies in der obersten Zeile von FIG 2 dargestellt ist. Allerdings befindet sich die vorderste Postsendung $S_{i-2}$ noch auf der Waage 10, so dass das von der Waage 10 bestimmte Gewicht nicht dem Gewicht der Postsendung $S_i$ entspricht. Mit dem Beginnen des Wiegens muss daher so lange gewartet werden, bis die in FIG 2 als vorderstes dargestellte Postsendung $S_{i-2}$ die Waage 10 verlassen hat, wie das in der zweiten Zeile von FIG 2 dargestellt ist.

Hierfür muss der Sendungsstrom im Transportmittel 4 um die Strecke v, die als Vorlaufverlust bezeichnet wird, weiter transportiert werden. Nun befindet sich nur die Postsendung $S_i$ auf der Waage und der Wiegeprozess kann beginnen. Die Wiegestrecke x, die zum Wiegen zur Verfügung steht, ist in der dritten Zeile von FIG 2 dargestellt. Sie endet dann, wenn die nachlaufende Postsendung $S_{i+2}$ die Waage 10 erreicht. Ab diesem Moment befindet auch sie sich auf der Waage 10, so dass ihr Gewicht die Ermittlung des Gewichts der vorlaufenden Postsendung $S_i$ stört. Bis die Vorderkante 48 der Postsendung $S_i$ das Ende der Waage 10 erreicht hat, wird sie noch um den so genannten Nachlaufverlust n transportiert.

Die zur Verfügung stehende Wiegestrecke x ist in der vierten Zeile von FIG 2 noch einmal dargestellt. Sie ergibt sich aus

$$x = w - s_i - v - n,$$

wobei w die Länge der Waage 10 und $s_i$ die Länge der Postsendung $S_i$ ist. Ist die Wiegestrecke x bzw. der effektive Wiegeweg kleiner als die minimale Wiegestrecke $x_{min}$, der sich aus der notwendigen Prozesszeit, also der Einschwingdauer zuzüglich der Wiegedauer, und der Transportgeschwindigkeit ergibt, so ist ein Bestimmen des Gewichts der Postsendung $S_i$ nicht zuverlässig möglich.

Es ist somit möglich, dass mit Hilfe des Sensors 42 und durch das Prozessmittel 30 bereits frühzeitig bestimmt wird, welche Postsendung S gewogen werden kann und welche nicht. Entsprechend steuert das Prozessmittel 30 die vorangegangen und nachfolgend beschriebenen Verfahrensschritte. Zur Berechnung des Vorlaufverlusts v und des Nachlaufverlusts n können folgende Gleichungen verwendet werden:

$$v = w - s_i + L_{i-1}, \quad \text{für:}\ s_i + L_{i-1} < w, \quad \text{sonst } 0,$$

$$n = w - s_i + L_{i+1} \quad \text{für:}\ s_i + L_{i+1} < w, \quad \text{sonst } 0,$$

mit $L_{i+1} := l_{i+1} + l_{i+2} + s_{i+1}$ und $L_{i-1} := l_{i-1} + li + s_{i-1}$,
wobei $l_i$ die der Postsendung $S_i$ vorlaufende Lücke ist.

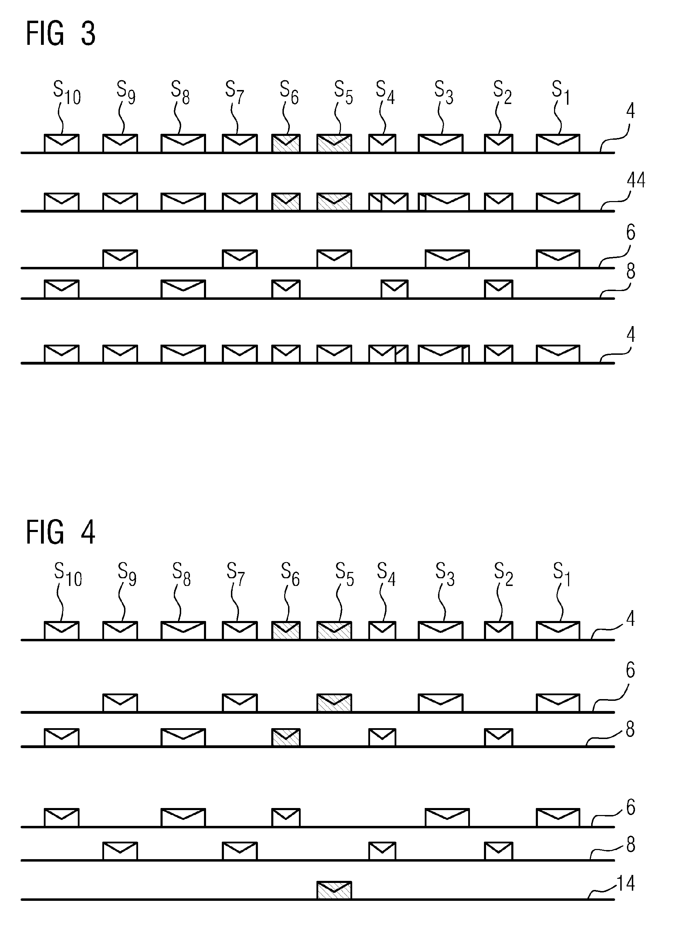

FIG 3 zeigt in der obersten Zeile zehn Postsendungen $S_1$-$S_{10}$ in einem Sendungsstrom, so wie er das Ausschleusemittel 16 oder die Weiche 32 erreicht. Die Lücken zwischen den Postsendungen $S_1$-$S_{10}$ sind alle unterschiedlich, was durch ein unbeabsichtigtes Verschieben der Postsendungen $S_1$-$S_{10}$ auf ihrem Transportweg vom Vereinzelungsmittel 40 gegebenenfalls durch diverse Bearbeitungsmodule bis zum Ausschleusemittel 16 resultiert. Die Längen der Lücken und Postsendungen $S_1$-$S_{10}$ werden vom Sensor 42 gemessen und vom Prozessmittel 30 verarbeitet, wobei vom Prozessmittel 30 erkannt wird, dass die Kombination der Längen der Postsendungen $S_5$, $S_6$ mit den vorhergehenden und nachlaufenden Lücken so ungünstig ist, dass diese beiden Postsendungen $S_5$, $S_6$ nicht gewogen werden können. Zur Behebung dieses Mangels steuert das Prozessmittel 30 die Verschiebemittel 22, 24 oder das Verschiebemittel 36 so an, dass die Postsendungen $S_3$, $S_4$ ein Stück weit nach vorne, also in Transportrichtung, verschoben werden, wie in Zeile 2 von FIG 3 angedeutet ist.

Nach oder vor dem Verschieben dieser beiden Postsendungen $S_3$, $S_4$, je nachdem wo die Verschiebemittel 22, 24, 36 angeordnet sind, wird der Sendungsstrom in diesem Ausführungsbeispiel symmetrisch auf die beiden Wiegestränge 6, 8 aufgeteilt, die - abweichend von FIG 1 - im Folgenden der Einfachheit halber als mit gleicher Transportlänge angenommen werden. Durch die vergrößerte Lücke zwischen den beiden Postsendungen $S_3$ und $S_5$ auf dem einen Wiegestrang 6 und den beiden Postsendungen $S_4$ und $S_6$ auf dem anderen Wiegestrang 8 ist der Vorlaufverlust v bezüglich der Messung der Postsendungen $S_5$, $S_6$ kleiner und die Wiegestrecke x ist so groß oder etwas größer als die benötigte minimale Wiegestrecke $x_{min}$. Waren diese beiden Postsendungen $S_5$, $S_6$ zuvor nicht messbar, was durch ihre Schraffur angedeutet werden soll, so sind sie nunmehr durch das Verschieben der vorlaufenden Postsendungen $S_3$, $S_4$ messbar geworden und ihr Gewicht kann mittels der Waagen 10, 12 bestimmt werden.

Mittels der Weiche 34 werden die beiden Sendungsströme wieder in einem gemeinsamen Sendungsstrom vereint, wie in der untersten Zeile aus FIG 3 dargestellt ist. Vor oder nach dieser Vereinigung, je nach Anordnung der Verschiebemittel 26, 28, 38, können die Postsendungen $S_3$, $S_4$ wieder so verschoben werden, dass die Lücken zwischen den Postsendungen $S_2$, $S_3$, $S_4$ und $S_5$ so eingestellt sind, dass diese Postsendungen $S_2$ - $S_5$ problemlos beispielsweise eine Sortieranlage durchlaufen können. Diese Rückkorrektur der Lücken ist ebenfalls in der untersten Zeile von FIG 3 angedeutet.

In FIG 4 ist ein weiteres Ausführungsbeispiel dargestellt mit ebenfalls zehn Postsendungen $S_1$ - $S_{10}$ in einem Sendungsstrom vor dem Ausschleusemittel 16. Analog zum Ausführungsbeispiel aus FIG 3 sind die beiden Postsendungen $S_5$, $S_6$ wegen ihrer Länge in Verbindung mit den sie umgebenden kleinen Lücken und der Längen der sie umgebenden Postsendungen $S_4$, $S_7$ nicht wiegbar. Für den Fall, dass keine Verschiebemittel 22 - 28, 36, 38 zur Verfügung stehen oder die Längen der Postsendungen $S_1$ - $S_7$ und die Lücken dazwischen dergestalt sind, dass ein Verschieben einzelner Postsendungen $S_1$ - $S_7$ nicht zu einer Wiegbarkeit der Postsendungen $S_5$, $S_6$ führen kann, kann die Rejectrate von derzeit zwei Postsendungen $S_5$, $S_6$ im Sendungsstrom von zehn Postsendungen $S_1$ - $S_{10}$ mit Hilfe des Bypasses 14 reduziert werden.

Zwar macht auch ein Aufteilen der Postsendungen $S_1$ - $S_{10}$ auf die beiden Wiegestränge 6, 8 das Wiegen der Postsendungen $S_5$, $S_6$ allein noch nicht möglich, wie in der mittleren Zeile aus FIG 4 dargestellt ist, jedoch kann ein Ausschleusen der fünften Postsendung $S_5$ die Situation etwas verbessern. Hierfür wird die Postsendung $S_5$ durch das Ausschleusemittel 16 auf den Bypass 14 geleitet, und die nachfolgenden Postsendungen $S_6$ - $S_{10}$ werden umgekehrt auf die beiden Wiegestränge 6, 8 verteilt, wie in der untersten Zeile von FIG 4 dargestellt ist. Hierdurch wird zwar die Postsendung $S_5$ weiterhin nicht messbar, die nachfolgende Postsendung $S_6$ kann jedoch auf der Waage 10 gemessen werden, ebenso wie die nachfolgenden Postsendungen $S_7$ - $S_{10}$ auf dieser oder der anderen Waage 12. Durch gezieltes Ausschleusen der Postsendung $S_5$ kann damit die Rejectrate halbiert werden.

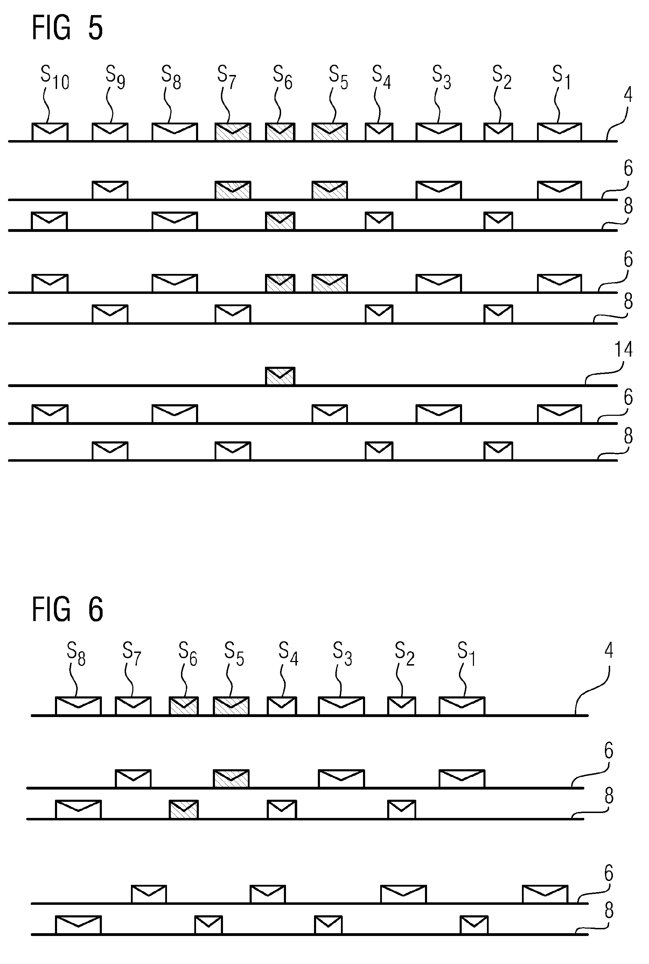

FIG 5 zeigt ein weiteres Ausführungsbeispiel, bei dem die Postsendungen $S_5$, $S_6$ und $S_7$ durch ein Zusammentreffen ihrer Längen und der sie umgebenden Lücken nicht wiegbar sind. Auch eine Aufteilung auf die beiden Wiegestränge 6, 8 kann hieran nichts ändern, wie in der zweiten Zeile von FIG 5 durch diese drei schraffierten Postsendungen $S_5$ - $S_7$ dargestellt ist. Allerdings kann eine asymmetrische Aufteilung der Postsendungen $S_1$ - $S_{10}$ auf die

beiden Wiegestränge 6, 8 die Rejectrate von drei auf zwei von diesen zehn Postsendungen $S_1 - S_{10}$ reduzieren, wie in der dritten Zeile von FIG 5 dargestellt ist. Hierbei werden zwei zuvor direkt hintereinander geführte Postsendungen $S_5$, $S_6$ direkt hintereinander in einen Wiegestrang 6 geführt und nicht aufgetrennt. Hierdurch wird die nachfolgende Postsendung $S_7$ durch die große ihr vorlaufende Lücke bis zur Postsendung $S_4$ wiegbar und die Rejectrate wird verringert.

Die Rejectrate kann noch weiter verringert werden, wenn der Bypass 14 ausgenutzt wird, wie in der letzten Zeile von FIG 5 dargestellt ist. Die sechste Postsendung $S_6$ wird durch das Ausschleusemittel 16 in den Bypass 14 geführt, wodurch die bisher vorlaufende Postsendung $S_5$ durch die ihr nachlaufende große Lücke bis zur Postsendung $S_8$ und einen damit verschwindenden Nachlaufverlust n wiegbar wird. Auf diese Weise kann die Rejectrate auf eine von zehn Postsendungen $S_1 - S_{10}$ reduziert werden.

Eine weitere Möglichkeit zur Reduzierung der Rejectrate ist in FIG 6 dargestellt. Bei den in der obersten Zeile von FIG 6 gezeigten acht Postsendungen $S_1 - S_8$ seien wieder die Postsendungen $S_5$, $S_6$ wegen der geringen Sendungslängen und Lücken trotz einer Aufspaltung auf die beiden Wiegestränge 6, 8 - wie in der mittleren Zeile aus FIG 6 angedeutet - nicht wiegbar. Allerdings kann der Sendungsstrom als Ganzes von dem nicht gezeigten Beschleunigungsmittel oder direkt vom Vereinzelungsmittel 40 so beschleunigt werden, dass die Postsendungen $S_1 - S_8$ auseinander gezogen werden, wie dies in der untersten Zeile von FIG 6 dargestellt ist. Nach Beendigung des Wiegeprozesses wird der gesamte Sendungsstrom wieder verzögert, um diejenige Transportgeschwindigkeit zu erreichen, mit der seine Postsendungen $S_1 - S_8$ weiterverarbeitet werden können.

Durch die höhere Transportgeschwindigkeit als die Bearbeitungszeit in anderen Bearbeitungsmodulen, beispielsweise einer mit dem Transportmittel 4 verbundenen Sortieranlage, wird bei gleicher Prozesszeit der Waagen 10, 12 die notwendige minimale Wiegestrecke $x_{min}$ zwar vergrößert, dennoch kann der Wiegeprozess verbessert werden. Denn durch die vergrößerten Lücken L zwischen den Postsendungen $S_1 - S_8$ wird - bei gleich bleibender Sendungslänge $s_i$ - die verbleibende Wiegestrecke x überproportional vergrößert, so dass sie mit wachsender Transportgeschwindigkeit schneller anwächst als die minimale Wiegestrecke $x_{min}$. Durch ein Erhöhen der Transportgeschwindigkeit im Wiegesystem 20 kann - wie in FIG 6 dargestellt ist - die Rejectrate eliminiert werden.

**Patentansprüche**

1. Verfahren zum Wiegen von Postsendungen ($S, S_1 - S_{10}$), bei dem in einem Sendungsstrom transportierte Postsendungen ($S, S_1 - S_{10}$) in einem Wiegesystem (20) gewogen werden,
   **dadurch gekennzeichnet, dass** Abstände zwischen den zu wiegenden Postsendungen ($S, S_1 - S_{10}$) in Abhängigkeit eines Wiegeparameters aktiv beeinflusst werden.

2. Verfahren nach Anspruch 1,
   **dadurch gekennzeichnet, dass** die Abstände durch ein Verschieben einer Postsendung ($S, S_1 - S_{10}$) im Sendungsstrom beeinflusst werden.

3. Verfahren nach Anspruch 2,
   **dadurch gekennzeichnet, dass** die Abstände beeinflusst werden bevor die Postsendung ($S, S_1 - S_{10}$) das Wiegesystem (20) erreicht.

4. Verfahren nach Anspruch 2 oder 3,
   **dadurch gekennzeichnet, dass** die Abstände beeinflusst werden nachdem die Postsendung ($S, S_1 - S_{10}$) das Wiegesystem (20) verlassen hat.

5. Verfahren nach einem der vorhergehenden Ansprüche,
   **dadurch gekennzeichnet, dass** einzelne Postsendungen ($S, S_1 - S_{10}$) vor dem Wiegesystem (20) aus dem Sendungsstrom ausgeschleust werden.

6. Verfahren nach einem der vorhergehenden Ansprüche,
   **dadurch gekennzeichnet, dass** Postsendungen ($S, S_1 - S_{10}$) aus dem Sendungsstrom um das Wiegesystem (20) herum und wieder in einen Sendungsstrom eingeführt werden.

7. Verfahren nach einem der vorhergehenden Ansprüche,
   **dadurch gekennzeichnet, dass** ein im Wiegesystem (20) befindlicher Teil eines Sendungsstroms mit einer höheren Geschwindigkeit transportiert wird als ein Teil des Sendungsstroms vor und/oder nach dem Wiegesystem (20).

8. Verfahren nach einem der vorhergehenden Ansprüche,

**dadurch gekennzeichnet, dass** ein Sendungsstrom von einem Vereinzelungsmittel (40) bis durch dass Wiegesystem (20) hindurch mit einer höheren Geschwindigkeit transportiert wird als nach dem Wiegesystem (20).

9. Verfahren nach einem der vorhergehenden Ansprüche,
**dadurch gekennzeichnet, dass** Postsendungen (S, $S_1$ - $S_{10}$) in zwei parallelen Wiegesträngen (6, 8) gewogen werden.

10. Verfahren nach einem der vorhergehenden Ansprüche,
**dadurch gekennzeichnet, dass** Postsendungen (S, $S_1$ - $S_{10}$) aus einem Sendungsstrom asymmetrisch auf zwei parallele Wiegestränge (6, 8) des Wiegesystems (20) aufgeteilt werden.

11. Verfahren nach einem der vorhergehenden Ansprüche,
**dadurch gekennzeichnet, dass** Postsendungen (S, $S_1$ - $S_{10}$) aus einem Sendungsstrom in Abhängigkeit von Abständen zwischen den Postsendungen (S, $S_1$ - $S_{10}$) auf zwei parallele Wiegestränge (6, 8) des Wiegesystems (20) aufgeteilt werden, insbesondere auch in Abhängigkeit von Längen der Postsendungen (S, $S_1$ - $S_{10}$).

12. Verfahren nach einem der vorhergehenden Ansprüche,
**dadurch gekennzeichnet, dass** Abstände zwischen Postsendungen (S, $S_1$ - $S_{10}$) an einem Vereinzelungsmittel (40) temporär vergrößert werden.

13. Verfahren nach einem der vorhergehenden Ansprüche,
**dadurch gekennzeichnet, dass** bei einem Einstellen von Abständen an einem Vereinzelungsmittel (40) von einem Einstellen konstanter Abstände zwischen Postsendungen (S, $S_1$ - $S_{10}$) auf ein Einstellen auf konstante Abstände zwischen Vorder- oder Hinterkanten von Postsendungen (S, $S_1$ - $S_{10}$) umgestellt wird.

14. Vorrichtung zum Wiegen von Postsendungen (S, $S_1$ - $S_{10}$) mit einem Transportmittel (4) zum Transport der Postsendungen (S, $S_1$ - $S_{10}$) in einem Sendungsstrom und einem Wiegesystem (20) zum Wiegen der im Sendungsstrom transportierten Postsendungen (S, $S_1$ - $S_{10}$),
**gekennzeichnet durch** ein Lückenmittel zum aktiven Beeinflussen von Abständen zwischen den zu wiegenden Postsendungen (S, $S_1$ - $S_{10}$) in Abhängigkeit eines Wiegeparameters des Wiegesystems (20).

15. Vorrichtung nach Anspruch 14,
**gekennzeichnet durch** einen Bypass (14) zum Vorbeiführen von Sendungen aus dem Sendungsstrom um das Wiegesystem (20).

16. Vorrichtung nach Anspruch 15,
**dadurch gekennzeichnet, dass** der Bypass (14) die gleiche Transportlänge wie das Wiegesystem (20) aufweist.

17. Vorrichtung nach einem der Ansprüche 14 bis 16,
**gekennzeichnet durch** zwei parallele Wiegestränge (6, 8) unterschiedlicher Transportlänge.

FIG 1

FIG 2

FIG 3

$S_{10}$  $S_9$  $S_8$  $S_7$  $S_6$  $S_5$  $S_4$  $S_3$  $S_2$  $S_1$

4

44

6

8

4

FIG 4

$S_{10}$  $S_9$  $S_8$  $S_7$  $S_6$  $S_5$  $S_4$  $S_3$  $S_2$  $S_1$

4

6

8

6

8

14

## FIG 5

## FIG 6

Europäisches
Patentamt

European
Patent Office

Office européen
des brevets

**EUROPÄISCHER RECHERCHENBERICHT**

Nummer der Anmeldung

EP 08 10 4758

| | **EINSCHLÄGIGE DOKUMENTE** | | | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) | |
| X | EP 1 683 586 A (TOKYO SHIBAURA ELECTRIC CO [JP]) 26. Juli 2006 (2006-07-26) * Absätze [0066], [0067], [0071] - [0074] * * Abbildung 7 * | 1-4,14 | INV. G01G19/00 | |
| Y | ----- | 1-17 | | |
| Y | DE 196 04 090 A1 (AEG ELECTROCOM GMBH [DE] SIEMENS AG [DE]) 7. August 1997 (1997-08-07) * Abbildungen 1-3 * | 5,6,9, 11,15-17 | | |
| Y | ----- | 1-17 | | |
| Y | DE 10 2004 012378 B3 (SIEMENS AG [DE]) 22. September 2005 (2005-09-22) * Absätze [0022], [0023] * * Abbildung 1 * | 1,14 | | |
| Y | ----- US 5 423 527 A (TRANQUILLA MICHAEL N [US]) 13. Juni 1995 (1995-06-13) * Anspruch 1 * * Abbildung 1 * | 1,14 | RECHERCHIERTE SACHGEBIETE (IPC) | |
| D,Y | ----- EP 1 400 790 A (SIEMENS AG [DE]) 24. März 2004 (2004-03-24) * das ganze Dokument * | 1,14 | G01G B07C | |
| D,Y | ----- EP 0 881 956 B (SIEMENS AG [DE]) 5. April 2000 (2000-04-05) * das ganze Dokument * ----- | 1,14 | | |

Der vorliegende Recherchenbericht wurde für alle Patentansprüche erstellt

| Recherchenort | Abschlußdatum der Recherche | Prüfer |
|---|---|---|
| München | 15. Oktober 2008 | Grand, Jean-Yves |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

............................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 08 10 4758

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-10-2008

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| EP | 1683586 | A | 26-07-2006 | JP<br>KR<br>US | 2006198489<br>20060084390<br>2006157319 | A<br>A<br>A1 | 03-08-2006<br>24-07-2006<br>20-07-2006 |
| DE | 19604090 | A1 | 07-08-1997 | WO<br>EP<br>JP<br>JP<br>US | 9728907<br>0881956<br>3654365<br>2000504823<br>6107579 | A1<br>A1<br>B2<br>T<br>A | 14-08-1997<br>09-12-1998<br>02-06-2005<br>18-04-2000<br>22-08-2000 |
| DE | 102004012378 | B3 | 22-09-2005 | CN<br>EP<br>WO<br>JP<br>US | 1929928<br>1727626<br>2005092524<br>2007527787<br>2007205143 | A<br>A1<br>A1<br>T<br>A1 | 14-03-2007<br>06-12-2006<br>06-10-2005<br>04-10-2007<br>06-09-2007 |
| US | 5423527 | A | 13-06-1995 | KEINE | | | |
| EP | 1400790 | A | 24-03-2004 | DE<br>US | 60305821<br>2004055790 | T2<br>A1 | 14-06-2007<br>25-03-2004 |
| EP | 0881956 | B | 05-04-2000 | DE<br>WO<br>EP<br>JP<br>JP<br>US | 19604090<br>9728907<br>0881956<br>3654365<br>2000504823<br>6107579 | A1<br>A1<br>A1<br>B2<br>T<br>A | 07-08-1997<br>14-08-1997<br>09-12-1998<br>02-06-2005<br>18-04-2000<br>22-08-2000 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1400790 B1
- EP 0881956 B1